# EUROPÄISCHE PATENTSCHRIFT

(11) **EP 1 533 921 B1**
(45) Veröffentlichungstag und Bekanntmachung des Hinweises auf die Patenterteilung: **09.04.2008**
(21) Anmeldenummer: 04090442.7
(22) Anmeldetag: 17.11.2004
(51) Int. Cl.: H04B 10/08, H03K 5/08, H04L 25/06

(54) **Digitales optisches Empfangsmodul und Verfahren zum Überwachen der Signalqualität eines übertragenen, modulierten optischen Signals**
Digital optical receiving apparatus and method for monitoring the quality of a modulated optical transmission signal
Module de réception optique numérique et méthode de surveillance de la qualité d'un signal de transmission optique modulé

(30) Priorität: 18.11.2003 US 523378 P
(43) Veröffentlichungstag der Anmeldung: 25.05.2005
(73) Patentinhaber: Finisar Corporation, Sunnyvale, CA 94089 (US)
(72) Erfinder: Fiedler, Jens, 14469 Potsdam-Eiche (DE); Kropp, Jörg-Reinhardt, 12355 Berlin (DE)
(74) Vertreter: Müller, Wolfram Hubertus

(56) Entgegenhaltungen:
- US-A- 5 524 144
- US-A1- 2003 043 440
- US-A1- 2003 112 496

## Beschreibung

Bezeichnung der Erfindung: Digitales optisches Empfangsmodul und Verfahren zum Überwachen der Signalqualität eines übertragenen, modulierten optischen Signals.

Die Erfindung betrifft ein digitales optisches Empfangsmodul und ein Verfahren zum Überwachen der Signalqualität eines übertragenen, modulierten optischen Signals. Sie findet insbesondere Anwendung bei der Erfassung und der Regeneration optischer Signale in digitalen optischen Empfängern.

### Hintergrund der Erfindung

In der optischen Nachrichtentechnik werden große Datenmengen in zunehmend komplexeren Netzwerken übertragen. Zur Gewährleistung der Funktionssicherheit der Netze ist es erforderlich, die Übertragungssicherheit auf einer Übertragungsstrecke bzw. die Qualität der übertragenen optischen Signale zu überwachen.

Die digitale Übertragung von Daten wird gemäß dem OSI-Referenzmodel (Reference Model For Open System Interconnection) mittels hierarchisch gegliederter Schichten beschrieben. Die unterste Bitübertragungsschicht (physical layer) legt die physikalischen Eigenschaften der Informationsübertragung fest. Die sich darüber befindende Abschnittssicherungsschicht (Data Link layer) umfasst Protokolle zur Überprüfung und ggf. zur Korrektur der übertragenen Informationen. Hierzu werden bestimmte Kodierverfahren zur Fehlerdetektion und Fehlerkorrektur wie z.B. 4B/5B oder 8B/10B-Codes verwendet oder auch aufwändigere Verfahren wie z.B. FEC (forward error correction) eingesetzt. Solche Verfahren ermöglichen es auch, die Bit-Fehlerrate und damit die Übertragungssicherheit auf einer Übertragungsstrecke zu detektieren.

Ein Nachteil der bekannten Verfahren zur Fehlererkennung und Fehlerkorrektur besteht darin, dass kritische Übertragungsstrecken erst durch das Auftreten von Fehlern erkannt werden. Es ist jedoch nicht möglich, während des Betriebes eines Netzwerks die Qualität der Verbindung zu beurteilen, noch bevor die Fehler aufgetreten sind. Darüber hinaus weisen die bekannten Verfahren mit zunehmender Effizienz einen zunehmenden Anteil an redundanten Informationen auf, so dass die effektive Nutzdatenrate herabgesetzt wird. Es besteht dementsprechend ein Bedarf nach Verfahren, die das Auftreten von Übertragungsfehlern bzw. eine mangelhafte Qualität der übertragenen, empfangenen Signale zu einem möglichst frühen Zeitpunkt erkennen.

Zum Empfang und zur Regenerierung von optischen Signalen nach Durchlaufen einer Übertragungsstrecke sind digitale optische Empfänger bekannt, die aus einem analogen Eingangsteil, in dem das optische Signal in ein analoges elektrisches Signal gewandelt wird, und einem digitalen Signalverarbeitungsteil, in dem das analoge Signal in ein digitales Datensignal mit normierter Amplitude und Taktinformation regeneriert wird, bestehen. In dem analogen Teil wird das empfangene optische Signal mittels einer Fotodiode in einem Fotostrom gewandelt und in einem Vorverstärker verstärkt. Zusätzlich kann eine Filterung vorgesehen sein. Der Analogteil des digitalen optischen Empfängers ist bevorzugt linear oder als amplitudenbegrenzender Verstärker ausgebildet.

Der Digitalteil des digitalen optischen Empfängers weist einen Entscheider auf, bei dem es sich beispielsweise um einen getakteten D-Flip-Flop handelt, der mit einem regenerierten Takt (aus einer Takt-Rückgewinnung des Datensignals) geschaltet wird. Hierdurch wird das exakte Timing des Originalsignals wiederhergestellt. Der Entscheider stellt an seinem Ausgang ein rein digitales Signal bereit, welches eine digitale Signalform mit einem normierten Signalpegel entsprechend zu erfüllender Normen aufweist. Die digitale Signalform zeichnet sich dabei durch Mindestanforderungen an die Anstiegsflanken und das Überschwingverhalten der einzelnen Pulse aus. Am Ausgang des Entscheiders liegt ein digitales Signal vor, welches vom ursprünglich gesendeten Signal bis auf eventuelle Bit-Fehler nicht mehr unterscheidbar ist. Ein entsprechender digitaler optischer Empfänger ist beispielsweise beschrieben in: E. Voges, K. Petermann (Hrsg.): optische Kommunikationstechnik, Kap. 23.7, Seiten 815 - 821, Springer-Verlag Berlin, Heidelberg 2002.

Aus der US 2002/0149821 A1 ist ein in einen Chip integrierter Schaltkreis zur Steuerung eines opto-elektronischen Transceivers bekannt, der eine Vielzahl von Funktionen des Transceivers überwacht und steuert. Steuer- und Monitorfunktionen des Transceivers werden dabei in bestimmte Speicherbereiche eines Speichers abgebildet. Bei Über- oder Unterschreiten vordefinierter Grenzwerte werden Flags gesetzt, deren Inhalt über eine serielle Schnittstelle erfassbar ist.

In der US 2003/0112496 A1 wird ein optisches Empfangsmodul mit einer Qualitätserfassungseinrichtung beschrieben. Die Anordnung dient der Detektion und Kompensation der chromatischen Dispersion innerhalb eines betrachteten Empfangsmoduls.

Die US 2003/0043440 A1 beschreibt eine Signalregeneration innerhalb eines optischen Empfangsmoduls.

Die US-A-5 524 144 beschreibt ein optisches Übertragungssystem mit einem optischen Sender, mehreren Repeatern und einem optischen Empfänger. Eine Qualitätserfassungseinrichtung wird durch Schaltkreise gebildet, deren Ausgangssignale mehreren Detektoren zugeführt werden. Die Ausgangssignale der Detektoren werden einem "Supervisor" zugeführt.

### Aufgabe der Erfindung

Der vorliegenden Erfindung liegt die Aufgabe zugrunde, ein digitales optisches Empfangsmodul sowie ein Verfahren zum Überwachen der Signalqualität eines übertragenen, modulierten optischen Signals bereitzustellen, die zu einem frühen Zeitpunkt nach einer Datenübertragung eine mangelhafte Übertragungsqualität feststellen und dabei ohne die Bereitstellung redundanter Informationen im Datenstrom auskommen.

### Zusammenfassung der Erfindung

Diese Aufgabe wird erfindungsgemäß durch ein digitales optisches Empfangsmodul mit den Merkmalen des Anspruchs 1 gelöst.

Erfindungsgemäß weist das Modul neben einem ersten, digitalen elektrischen Ausgang für das regenerierte digitale Signal zusätzlich einen zweiten elektrischen Ausgang auf, über den das von der Qualitätserfassungseinrichtung erzeugte Informationssignal oder ein davon abgeleitetes Signal zu einer externen Kommunikation bereitgestellt wird. Über diesen zweiten elektrischen Ausgang kann somit das Ergebnis der Qualitätsbeurteilung einer Steuereinheit bzw. einem Netzwerkmanagement mitgeteilt werden. Der zweite elektrische Ausgang stellt dabei einen zusätzlichen Pfad parallel zum ersten, digitalen Ausgang bereit.

Des Weiteren wird diese Aufgabe durch ein Verfahren zum Überwachen der Signalqualität eines übertragenen, modulierten optischen Signals mit den Merkmalen des Anspruchs 16 gelöst.

Das erfindungsgemäße Verfahren sieht ein Bereitstellen des Informationssignals oder eines davon abgeleiteten Signals für eine externe Kommunikation vor.

Die erfindungsgemäße Lösung zeichnet sich dadurch aus, dass eine Qualitätsbeurteilung an dem empfangenen, analog gewandelten Signal erfolgt, bevor dieses in einer Entscheidereinrichtung aufbereitet und in ein digitales Signal umgewandelt wird. Die Analyse des analogen Signals ermöglicht dabei eine Qualitätsbewertung der Übertragung zu einem Zeitpunkt, zu dem eventuelle Übertragungsfehler noch nicht entstanden sind, da das Signal zum Zeitpunkt der Qualitätsbeurteilung noch nicht die Entscheidereinrichtung durchlaufen und als digitales Signal ausgegeben ist. Damit kann zu einem sehr frühen Zeitpunkt eine Verschlechterung der Übertragungsstrecke festgestellt werden, wodurch eine deutlich höhere Sicherheit für das gesamte Kommunikationsnetz erreichbar ist.

Bekannte digitale optische Empfänger weisen üblicherweise eine genormte digitale Schnittstelle auf. Dementsprechend ist bevorzugt vorgesehen, dass eine Qualitätsbeurteilung innerhalb des digitalen optischen Empfangsmoduls erfolgt.

Die erfindungsgemäße Lösung ermöglicht eine Fehlererkennung bereits zu einem Zeitpunkt, bevor die Daten an die genormte digitale Schnittstelle abgegeben werden. Dabei kann der Informationsgehalt des analogen, durch die opto-elektronische Wandlereinrichtung bereitgestellten Signals ausgewertet werden. Insbesondere kann aus der Verformung des analogen Signals auf die Qualität der Übertragung und der übertragenen Signale geschlossen werden. Hinter dem Entscheider geht diese Information verloren. Sofern festgestellt wird, dass die Qualität der empfangenen Signale einen bestimmten Wert unterschreitet, wird dies beispielsweise einem Managementsystem eines zugeordneten Netzwerks mitgeteilt, worauf dieses zu einem frühem Zeitpunkt Maßnahmen zur Fehlerbeseitigung initiieren oder alternative Übertragungsstrecken bereitstellen kann. Dies war bisher erst möglich, nachdem im regenerierten Bit-Strom Bitfehler erkannt worden sind.

Die Bestimmung der Qualität des analogen elektrischen Signals erfolgt, indem mindestens ein Parameter ermittelt wird, der von der Qualität des Signals abhängt. Ein Signal weist dabei dann eine gute Qualität auf, wenn es die Bitfolge, die es moduliert, möglichst unverzerrt wiedergibt, d.h. wenn es möglichst geringe Abweichungen von dem digitalen Signal besitzt, das es vor Durchlaufen der Übertragungsstrecke einmal war.

Der zweite elektrische Ausgang wird in einer bevorzugten Ausgestaltung durch einen seriellen Bus bereitgestellt, über den Daten ausgelesen werden können. Alternativ wird das Ergebnis der Qualitätsüberwachung durch einen festgelegten Signalpegel (z.B. High, Low) am zweiten elektrischen Ausgang ausgegeben. Für diesen Fall wird der zweite elektrische Ausgang im folgenden auch als Funktionsausgang bezeichnet.

Es ist bevorzugt vorgesehen, dass das Modul einen Speicher aufweist, der mindestens einen vorgegebenen Referenzwert für die Qualität des analogen elektrischen Signals enthält. Dieser Referenzwert ist in einem dafür vorgesehenen Speicherbereich des Speichers gespeichert, beispielsweise im Rahmen der Modul-Herstellung. Der Referenzwert repräsentiert dabei eine bestimmte Übertragungsqualität. Die Qualitätserfassungseinrichtung vergleicht nun die Qualität eines elektrischen Signals mit dem Referenzwert und erzeugt in Abhängigkeit von dem Ergebnis des Vergleichs ein Informationssignal. Dieses Informationssignal kann wie bereits erwähnt ein bestimmter Signalpegel sein, der auf den zweiten elektrischen Ausgang gelegt wird. In einer alternativen Ausgestaltung ist das Informationssignal ein in einem bestimmten Speicherbereich eines Speichers gesetzter Flag, der über eine Kommunikationsverbindung wie einen seriellen Bus aus dem Speicher auslesbar ist. Ebenfalls kann vorgesehen sein, dass das Informationssignal ein bestimmter numerischer Wert ist, der in einem bestimmten Speicherbereich eines Speichers abgelegt wird. Dieser Wert ist wiederum über eine Kommunikationsverbindung wie einen seriellen Bus aus dem Speicher auslesbar.

In einer bevorzugten Ausgestaltung wird die Qualität des erfassten analogen Signals unter Auswertung eines Augendiagramms oder von Teilen davon bestimmt. Ein Augendiagramm stellt auf der x-Achse die Zeit und auf der y-Achse das Eingangssignal dar, wobei der regenerierte Takt zum Triggern verwendet wird. Das erscheinende Muster von zahlreichen, bei jedem Takt dargestellten Kurven hat die typische Form eines Auges (eye-Diagramm), wobei die Augenweite in horizontaler Richtung die Toleranz des Entscheider-Zeitpunkts und die Öffnung der vertikalen Richtung die Toleranz der Entscheider-Schwelle zu bestimmen erlaubt. Je weiter das Augenmuster geöffnet ist, je größer also die Fläche des Auges ist, desto besser ist die Signalqualität und desto sicherer ist eine Datenrekonstruktion möglich.

Die Qualität des analogen elektrischen Signals wird bevorzugt über die Beurteilung der freien inneren Fläche des Augendiagramms ermittelt. Die Auswertung ermittelt beispielsweise die Fehlerwahrscheinlichkeit bei der Variation des Abtastzeitpunkts in Bezug auf die Phase und/oder die Amplitude des Signals. Eine Variation der Phasenlage eines Pulses wird auch als Jitter bezeichnet. Insofern kann unter diesem Aspekt die Qualität des analogen elektrischen Signals über eine Jitter-Messung bestimmt werden.

Eine Variation der Amplitude bestimmt die Größe der Augenöffnung. Die Amplitude variiert insbesondere in Abhängigkeit von dem Rauschanteil des Signals. Die Messung der Variation der Amplitude des Augendiagramms entspricht somit einer Messung des Rauschanteils. Dabei wird beispielsweise bestimmt, welches Verhältnis die mittlere Abweichung des High-Pegels zu einem Absolut-Wert besitzt.

Die genannten Parameter "Jitter" und "Rauschen" können auch in anderer Weise als über die Analyse eines Augendiagramms ermittelt werden. Beispielsweise wird von vornherein nur die ansteigende oder abfallende Flanke des Signals betrachtet. Allgemein wird darauf hingewiesen, dass es mehrere Möglichkeiten gibt, eine Signalqualität zu bestimmen und auf einen numerischen Wert abzubilden. Beispielsweise kann neben einem Jitter und einem Rauschen auch die Flankensteilheit als Maß für die Qualität erfasst werden.

Ebenfalls ist es möglich, dass mehrere Parameter gleichzeitig ermittelt werden, die von der Qualität des Signal abhängen, und entweder für jeden Parameter ein gesonderter Vergleich mit einem vorgespeicherten Referenzwert erfolgt oder die Parameter zu einem numerischen Wert zusammengefasst werden.

Die Ermittlung der Qualität erfolgt in der Qualitätserfassungseinrichtung. Diese ist durch eine elektrische Schaltung realisiert. Entsprechende elektrische Schaltungen sind an sich bekannt. Sie finden beispielsweise Anwendung in an sich bekannten Verfahren zur elektronischen Dispersionskompensation (EDC - electronic dispersion compensation). Entsprechende EDC-Chip werden beispielsweise von der advico microelectronics GmbH, 45657 Recklinghausen, Deutschland, unter der Bezeichnung "Eye Diagram Monitor" hergestellt. Diese bekannten EDC-Chips sehen dabei eine Auswertung des Augendiagramms zur Erfassung einer Signalverzerrung vor. Allgemein dienen EDC-Chips einer Signalverbesserung durch Equalizing und andere Methoden zur Verbesserung der Signalform. Dabei kann auch die Qualität des Datensignals erfasst werden. Das Ergebnis der Qualitätsanalyse wird jedoch allein für eine Signalverbesserung eingesetzt, nicht dagegen wie bei der vorliegenden Erfindung zum Überwachen und Anzeigen der Übertragungsqualität.

Bevorzugt weist das Empfangsmodul zusätzlich einen Controller (Steuerprozessor) auf, der zumindest die Qualitätserfassungseinrichtung sowie eine externe Kommunikation steuert. Gegebenenfalls können auch weitere Komponenten des Moduls wie eine Signalaufbereitungseinrichtung durch den Controller gesteuert werden. Auch kann vorgesehen sein, dass der Controller Teil der Qualitätserfassungseinrichtung ist.

Das digitale optische Empfangsmodul weist in einer Ausgestaltung der Erfindung zusätzlich eine Signalverbesserungseinrichtung auf, die ein Ausgangssignal verbesserter Qualität bereitstellt. Die Signalverbesserungseinrichtung ist dabei zwischen der Wandlereinrichtung und der Entscheidereinrichtung angeordnet. Das analoge Ausgangssignal der Signalverbesserungseinrichtung wird zum einen der Qualitätserfassungseinrichtung und zum anderen der Entscheidereinrichtung zugeführt. Eine Qualitätsbeurteilung des analogen Signals erfolgt bei dieser Ausgestaltung somit an einem analogen Signal, das hinsichtlich seiner Qualität (Flankensteilheit, Rauschanteil, Signalpegel, Jitter, etc.) bereits verbessert ist. Eine aufgrund eines Vergleichs mit einem Referenzwert festgestellte mangelhafte Qualität der Datenübertragung über die Übertragungsstrecke wird somit erst dann festgestellt, wenn auch die Signalregeneration das übertragende Signal nicht ausreichend hinsichtlich seiner Eigenschaften verbessern konnte.

In einer alternativen Ausführungsform ist eine solche Signalverbesserungseinrichtung hinter der Qualitätserfassungeinrichtung angeordnet. Die Qualitätserfassungeinrichtung prüft somit die Qualität des hinsichtlich seiner Qualität noch nicht verbesserten Signals. Die Signalverbesserung in der Signalverbesserungseinrichtung (z.B. hinsichtlich Flankensteilheit, Rauschanteil, Signalpegel, Jitter, etc. des Signals) dient bei dieser Variante allein dazu, der Entscheidereinrichtung ein verbessertes Signal zuzuführen, so dass eine erhöhte Wahrscheinlichkeit besteht, dass die Entscheidereinrichtung jeweils die richtige Entscheidung (High, Low) bei der Erzeugung eines digitalen Signals vornimmt.

Es kann bei diesen Ausgestaltungen vorgesehen sein, dass die Signalverbesserungseinrichtung zusammen mit der Qualitätserfasssungseinrichtung Teil einer Schaltung zur elektronischen Dispersionskompensation (EDC) ist.

Des Weiteren ist bevorzugt vorgesehen, dass das Ergebnis der Qualitätsüberwachung nicht nur an den zweiten elektrischen Ausgang ausgegeben wird, sondern auch an die Signalverbesserungseinrichtung geführt wird, so dass im Rahmen einer Regelung oder Steuerung die Signalverbesserungseinrichtung ein analoges Ausgangssignal mit einer möglichst hohen Qualität ausgibt.

### Kurze Beschreibung der Zeichnungen

Die Erfindung wird nachfolgend unter Bezugnahme auf die Figuren anhand zweier bevorzugter Ausführungsbeispiele näher erläutert. Es zeigen:
- Figur 1: ein erstes Ausführungsbeispiel eines digitalen optischen Empfangsmoduls unter Darstellung der einzelnen Funktionsblöcke;

- Figur 2: ein zweites Ausführungsbeispiel eines digitalen optischen Empfangsmoduls unter Darstellung der einzelnen Funktionsblöcke; und
- Figur 3: ein drittes Ausführungsbeispiel eines digitalen optischen Empfangsmoduls unter Darstellung der einzelnen Funktionsblöcke.

### Beschreibung mehrerer bevorzugter Ausführungsbeispiele

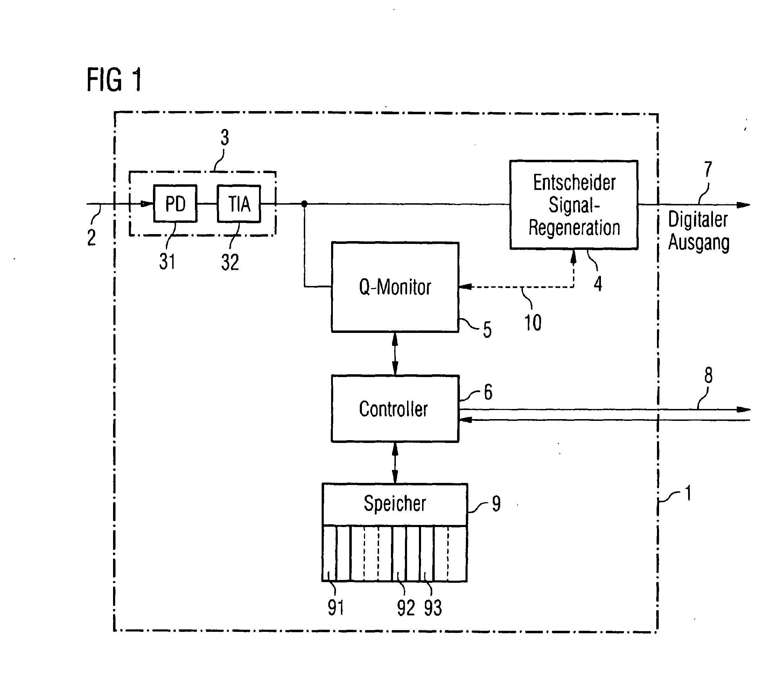

Die Figur 1 zeigt ein digitales optisches Empfangsmodul 1, das an einem optischen Eingang 2 eine opto-elektronische Wandlereinrichtung aufweist, die aus einer Fotodiode 31 und einem Vorverstärker 32 besteht. Bei der Fotodiode handelt es sich beispielsweise um eine Pin-Diode oder eine Lawinen-Fotodiode, die das eintreffende optische Signal in einen Fotostrom wandelt. Bei dem Verstärker 32 handelt es sich um einen analogen Vorverstärker, z.B. einen Transimpedanz-Amplifier (TIA).

Das am optischen Eingang 2 anliegende Signal ist ein moduliertes und kodiertes optisches Signal, das eine Datenübertragungsstrecke durchlaufen hat. Nach Wandlung in der Wandlereinrichtung 3 liegt ein analoges elektrisches Signal vor. Signalverzerrungen und andere Störungen, die das optische Signal bei Durchlaufen der Übertragungsstrecke erfahren ist, spiegeln sich in der Signalform des analogen elektrischen Signals wider.

Mit dem Ausgang der Wandlereinrichtung 3 ist eine Entscheider-Einrichtung 4 verbunden, die das analoge elektrische Signal in ein digitales Signal umwandelt. Die Entscheider-Einrichtung 4 stellt ein im Stand der Technik an sich bekanntes Schaltungsbauteil zur Signalregeneration dar. Es führt zur Signalregeneration ein Re-Amplification, ein Re-Shaping und ein Re-Timing durch. Dabei bedeutet Re-Amplification die Wiederherstellung eines normierten Signalpegels, Re-Shaping die Wiederherstellung der digitalen Signalform (wobei Mindestanforderungen an die Anstiegsflanken und das Überschwingverhalten der Pulse zu beachten sind) und Re-Timing eine strenge zeitliche Justierung der Pulse zu einem Datentakt, der aus dem Datenstrom im digitalen Empfangsteil erzeugt wird. Letzteres erfolgt beispielsweise durch an sich bekannte PLL-Schaltungen (PLL - Phased Locked-Loop), so dass hierauf nicht weiter eingegangen wird.

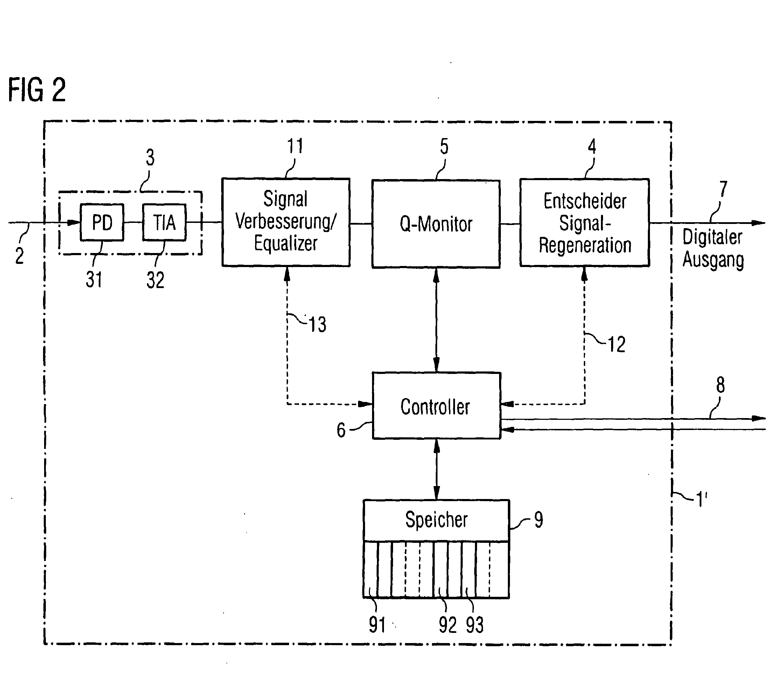

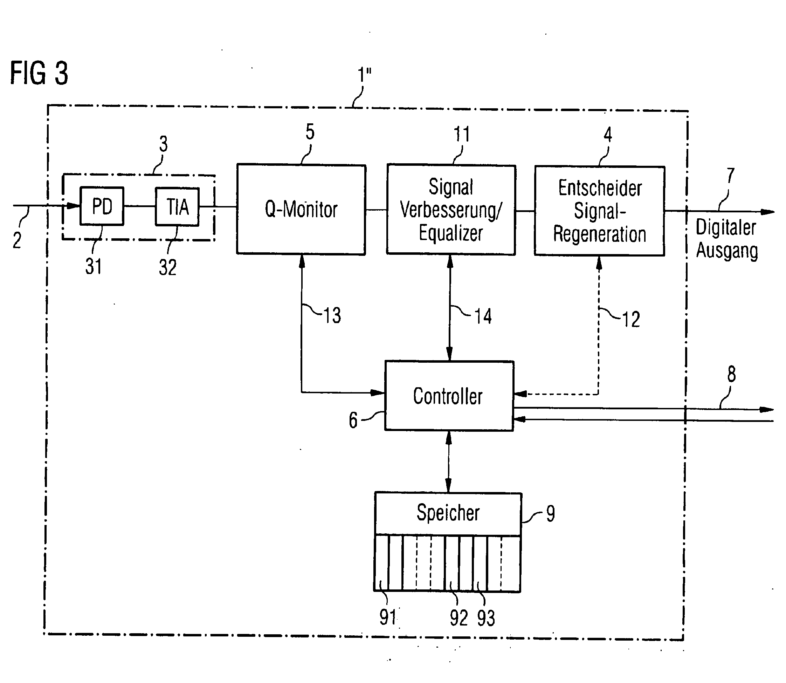

Ein Re-Amplification kann auch in einer der Entscheider-Einrichtung vorgelagerten Einrichtung zur Signalverbesserung erfolgen, wie anhand der Ausführungsbeispiele der Figuren 2 und 3 noch ausgeführt wird. Es erfolgt in der Entscheider-Einrichtung jedoch ein Re-Timing und ein Re-Shaping zur Erzeugung eines digitalen Signals.

Der eigentliche Entscheider ist üblicherweise ein Flip-Flop, welches mit dem rückgewonnenen Datentakt getaktet wird. Am Ausgang 7 des Moduls 1 wird durch die Entscheider-Einrichtung 4 ein rein digitales Signal bereitgestellt, welches vom ursprünglich gesendeten Signal bis auf eventuelle Bit-Fehler nicht mehr unterscheidbar ist.

Das Empfangsmodul 1 weist des Weiteren eine Qualitätserfassungseinrichtung (Q-Monitor) 5 auf, die ebenfalls mit dem Ausgang der Wandlereinrichtung 3 verbunden ist. Die Qualitätserfassungseinrichtung 5 erfasst die Qualität des analogen elektrischen Signals, das am Ausgang des Wandlerbausteins 3 zur Verfügung steht. Dieses analoge Signal weist für den Fall einer schlechten Qualität der empfangenen Daten und damit einer entsprechend hohen Bit-Fehlerrate entsprechende Verformungen in der Signalform auf. Die Qualitätserfassungseinrichtung 5 ermittelt die Qualität des analogen Signals, und zwar vor dessen Umwandlung in ein digitales Signal in der Entscheider-Einrichtung 4, und stellt in Abhängigkeit von der vorhandenen Qualität ein Informationssignal bereit, wobei auch vorgesehen sein kann, dass ein Informationssignal nur für den Fall erzeugt wird, dass die Qualität einen vorgegebenen Mindestwert unterschreitet.

Die Qualitätserfasssungseinrichtung 5 ist dabei mit einem Controller 6 verbunden, der durch einen Mikroprozessor gebildet ist. Der Controller 6 ist mit einem Speicher 9 verbunden, der eine Vielzahl von Speicherbereichen 91, 92, 93 aufweist, wie noch erläutert werden wird. Der Speicher 9 ist über den Controller beschreibbar und auslesbar. Der Controller 6 kann über einen zweiten elektrischen Ausgang 8 des Empfangsmoduls 1, der unabhängig von dem digitalen Ausgang 7 ist, mit anderen elektronischen Komponenten kommunizieren. Bevorzugt handelt es sich bei dem zweiten Ausgang 8 um einen seriellen Bus, wobei der Controller 6 über eine nicht dargestellte standardgemäße serielle Schnittstelle mit dem seriellen Bus verbunden ist.

Der Controller 6 steuert die Qualitätserfassungseinrichtung 5 sowie deren Zugriff auf den Speicher 9 und eine externe Kommunikation über den seriellen Bus 8. Sofern statt eines seriellen Busses als elektrischer Ausgang 8 ein Funktionsausgang vorgesehen ist, der mit einem bestimmten Signalpegel belegt wird, (z.B. High oder Low), steuert der Controller 6 einen solchen Funktionsausgang 8.

Es kann vorgesehen sein, dass der Controller 6 Teil der Qualitätserfassungseinrichtung 5 ist bzw. beide eine gemeinsame Einheit darstellen.

In dem Speicher 9 ist ein Speicherbereich 91 vorgesehen, der einen Kennwert oder Referenzwert für eine bestimmte, geforderte Übertragungsqualität repräsentiert. Dieser Wert wird beispielsweise im Rahmen der Modulherstellung in den Speicherbereich eingelesen. Über die serielle Schnittstelle 8 kann dieser Wert jedoch auch zu einem späteren Zeitpunkt in den Speicherbereich 91 eingelesen oder in diesem modifiziert werden.

Die Qualitätserfassungseinrichtung 5 liest über den Controller 6 den Wert des Speicherbereichs 91 ein und vergleicht diesen Wert während des Übertragungsbetriebes mit der Qualität des übertragenen Signals. Um zwei numerische Werte vergleichen zu können, wird dabei die Qualität des übertragenen Signals durch einen bestimmten numnerischen Wert dargestellt.

Eine Möglichkeit hierzu besteht darin, die freie, innere Fläche eines Augendiagramms durch die Qualitätserfasssungseinrichtung 5 auszuwerten. Ein Augendiagramm weist die phasenrichtig überlagerten Eingangssignale für die Low-Signale und die High-Signale auf. Auf der y-Achse ist dabei das Eingangssignal, auf der x-Achse die Zeit dargestellt. Je größer die Öffnung des Auges ist, eine desto höhere Qualität weist das Signal auf. Über die Fläche des Augendiagramms kann somit ein aussagekräftiger Parameter für die Qualität des analogen Signals ermittelt werden. Neben der Fläche des Augendiagramms können auch davon abgeleitete Werte wie der Rauschanteil des Signals, ein Jitter oder die Flankensteilheit ermittelt werden.

Des Weiteren wird darauf hingewiesen, dass es vorteilhaft sein kann, wenn die Qualitätserfassungseinrichtung 5 - etwa zur phasenrichtigen Überlagerung der Eingangssignale zur Bildung eines Augendiagramms - Informationen über den Takt des empfangenen Signals besitzt. Hierzu kann vorgesehen sein, dass ein Referenztakt in der Qualitätserfassungseinrichtung 5 selbst erzeugt wird. In einer anderen, bevorzugten Ausgestaltung wird der Qualitätserfassungseinrichtung 5 das in der Entscheider-Einrichtung 4 regenerierte Taktsignal zugeführt. Dies erfolgt über die Verbindung 10 der Fig. 1. Bevorzugt besitzt somit auch die Qualitätserfassungseinrichtung 5 ein Taktsignal, über das sich geeignete Abtastzeitpunkte zur Bestimmung der Qualität des empfangenen analogen Signals bestimmen lassen.

Der aktuell gewonnene Wert für die Signalqualität wird mit dem in dem Speicherbereich 91 gespeicherten Referenzwert verglichen. In Abhängigkeit von diesem Vergleich wird ein Informationssignal erzeugt. Der Vergleich kann dabei in der Qualitätserfassungseinrichtung 5 oder in dem Controller 6 erfolgen, wobei der Controller 6 wie bereits erwähnt Teil der Qualitätserfassungseinrichtung sein kann.

Es gibt nun verschiedene Möglichkeiten, das dabei erzeugte Informationssignal darzustellen und an weitere Komponenten zu übertragen. Für den Fall, dass der Vergleich des aktuellen Kennwertes mit dem Referenzwert ergibt, dass die Qualität des übertragenden Signals unterhalb eines kritischen Grenzwertes liegt, so kann daraufhin über den Controller 6 in dem Speicher 9 (oder einem anderen Speicher) in einem dafür vorgesehenen Speicherbereich 92 ein Flag gesetzt werden. Das Flag ist über den Ausgang 8 auslesbar, etwa durch einen Host-Rechner, einen Endnutzer oder ein Management-System eines zugehörigen Netzwerks.

In einer anderen Ausgestaltung kann vorgesehen sein, dass von der Qualität des analogen Signals abhängiger numerischer Wert in einem bestimmten Speicherbereich 93 des Speichers 9 (oder einem anderen Speicher) gespeichert wird. Bei diesem numerischen Wert handelt es sich beispielsweise um den Kennwert der Qualität des aktuellen analogen Signals. In einem anderen Beispiel handelt es sich bei dem numerischen Wert um das Verhältnis des aktuellen Kennwerts zu dem Referenzwert. Der numerische Wert kann wiederum über den Controller 6 und den Ausgang 8 von einer externen Komponente ausgelesen werden.

Ein weiteres Beispiel für das durch die Qualitätserfassungseinrichtung 5 erzeugte Signal besteht darin, dass an dem Ausgang 8 in Abhängigkeit von dem Vergleich des aktuellen Kennwerts der Signalqualität mit dem Referenzwert ein bestimmter Signalpegel ausgegeben wird. Beispielsweise wird ein High-Pegel für den Fall ausgegeben, dass die Signalqualität oberhalb des Referenzwertes liegt, während der Signalpegel auf Low gezogen wird, wenn die Qualität unterhalb des Referenzwertes liegt.

Die beschriebenen Ausgestaltungen für eine Signalisierung, dass die Signalqualität unterhalb eines vorgegebenen Wertes liegt, sind nur beispielhaft zu verstehen. Weitere Varianten einer solchen Signalisierung bzw. einer geeigneten Signalerzeugung sind möglich. Dabei kann grundsätzlich auch vorgesehen sein, dass die entsprechende Information nicht über einen gesonderten, zusätzlichen Ausgang 8 bereitgestellt wird, sondern als Inband-Signal dem Signal des digitalen Ausgangs überlagert wird.

Es wird darauf hingewiesen, dass die Qualitätserfassungseinrichtung 5 auch ein Steuersignal an die Entscheider-Einrichtung 4 geben kann, wie durch den gestrichelten Pfeil 10 angegeben. Dies ermöglicht, bei der Signalregeneration in der Entscheider-Einrichtung 4 zusätzliche Informationen über die Signalqualität zu berücksichtigen, die die Qualitätserfassungseinrichtung 5 ermittelt hat.

Die Funktion des optischen Empfangsmoduls 1 ist derart, dass ein am Dateneingang 2 anliegendes moduliertes optisches Signal, das eine Übertragungsstrecke durchlaufen hat, durch die Fotodiode 31 in ein analoges elektrisches Signal gewandelt und anschließend in dem Vorverstärker 2 verstärkt wird. Dieses analoge Signal wird zum einen der Entscheider-Einrichtung 4 zugeführt, die eine Regeneration des Signals zur Wiederherstellung einer digitalen Signalform durchführt. Des Weiteren wird das Signal der Qualitätserfassungseinrichtung 5 zugeführt, die eine Qualitätsbeurteilung unter Berücksichtigung eines vorgespeicherten Referenzwertes durchführt. Das Ergebnis wird über einen elektrischen Ausgang 8 ausgegeben, wobei der Controller 6 das gesamte Verfahren und den Zugriff auf den Speicher 9 kontrolliert. Das Unterschreiten einer vorgegebenen Qualität des empfangenen und in ein analoges Signal gewandelten Signals bzw. eine damit korrespondierende Verschlechterung der Übertragungsstrecke wird noch vor einer Signalregeneration in der Entscheider-Einrichtung 4 erkannt und kommuniziert.

Das Ausführungsbeispiel der Figur 2 zeigt eine alternative Ausgestaltung eines digitalen optischen Empfangsmoduls 1'. Das Empfangsmodul 1' unterscheidet sich von dem Empfangsmodul 1 der Figur 1 insofern, als der Ausgang der Wandlereinrichtung 3 zunächst mit einer Signalverbesserungseinrichtung 11 verbunden ist. Das von der Signalverbesserungseinrichtung 11 an dem Ausgang bereitgestellte analoge Ausgangssignal wird dann der Qualitätserfassungseinrichtung 5 und der Entscheider-Einrichtung 4 zugeführt. Die Qualitätserfassungseinrichtung 5 ist mit dem Controller 6 verbunden.

Die Signalverbesserungseinrichtung 11 beseitigt Störungen und Verzerrungen des analogen Signals, die beispielsweise durch chromatische Dispersion und Modendispersion entstanden sind. Entsprechende integrierte Schaltkreise sind an sich bekannt. Die Signalaufbereitung erfolgt in der Regel durch gezielte Verstärkung bestimmter Frequenzen zur Verstärkung der Flankensteilheit (Equalizing). Darüber hinaus können andere Signalaufbereitungsmaßnahmen durchgeführt werden, wie beispielsweise eine Signalfilterung und eine Pegelvorgabe.

Bei dem Ausführungsbeispiel der Figur 2 erfolgt eine Qualitätsbeurteilung des analogen Signals, nachdem dieses in der Signalverbesserungseinrichtung 11 aufbereitet wurde. Dabei kann die aktuell ermittelte Qualität durch die Qualitätserfassungseinrichtung 5 bzw. den Controller 6 der Signalverbesserungseinrichtung 11 im Rahmen einer Rückkopplung mitgeteilt werden, wie durch den Pfeil 13 schematisch dargestellt. Auch kann die ermittelte Qualität bzw. ein daraus abgeleitetes Signal der Entscheider-Einrichtung 4 mitgeteilt werden, vgl. Pfeil 12, so dass diese Komponenten eine Information über die Signalqualität bei der Signalverbesserung bzw. Signalregeneration berücksichtigen können.

Es wird darauf hingewiesen, dass trotz einer Signalverbesserung im Block 11 die eigentliche Signalregeneration erst in der Entscheidereinrichtung 4 erfolgt.

Die Qualitätserfassungseinrichtung 5 kann zusammen mit der Signalverbesserungseinrichtung 11 Teil einer Schaltung zur elektronischen Dispersionskompensation sein. Das Ergebnis des Qualitäts-Monitorings wird sowohl zur Optimierung des Eingangssignals durch die Signalverbesserungseinrichtung (Rückkopplung 13) als auch für den Vergleich mit dem in einem Speicherbereich 91 des Speichers 9 gespeicherten Referenzwert verwendet. Die Qualitätsbeurteilung durch Vergleich mit einem abgespeicherten Referenzwert erfolgt wie in Bezug auf die Figur 1 beschrieben, so dass insofern auf die diesbezüglichen Ausführungen Bezug genommen wird.

Die Figur 3 zeigt ein weiteres Ausführungsbeispiel eines digitalen optischen Empfangsmoduls 1''. Der Unterschied zu dem Ausführungsbeispiel der Figur 2 besteht darin, dass die Qualitätserfassungseinrichtung 5 und die Signalverbesserungseinrichtung 11 vertauscht sind. Dementsprechend prüft die Qualitätserfassungseinrichtung 5 unmittelbar die Qualität des gewandelten und in dem Vorverstärker 32 verstärkten analogen Signals. Die Signalverbesserungseinrichtung 11 führt bei dieser Ausgestaltung eine Signalverbesserung durch, die allein dazu dient, der Entscheider-Einrichtung 4 eine verbesserte Grundlage für die Entscheidung zur Verfügung zu stellen, ob ein anliegendes Signal in einen High-Wert oder einen Low-Wert digitalisiert wird. Die Signalverbesserungseinrichtung 11 erhöht somit die Wahrscheinlichkeit, dass die Entscheider-Einrichtung 4 die "richtige" Entscheidung bei der Erzeugung eines digitalen Signals vornimmt.

Über eine Verbindung 14 zwischen der Signalverbesserungseinrichtung 11 und dem Controller 6 kann der Controller 6 das Ergebnis des Qualitäts-Monitoring der Signalverbesserungseinrichtung 11 mitteilen, so dass diese die entsprechende Information bei der Signalverbesserung berücksichtigen kann.

Es kann des weiteren vorgesehen sein, die Signalverbesserungseinrichtung 11 abzuschalten, wenn eine gute Qualität des analogen elektrischen Signals vorliegt. Sofern die Qualitätserfassungseinrichtung 5 eine gute Signalqualität ermittelt, so erhält die Signalverbesserungseinrichtung 11 bei dieser Ausgestaltung von dem Controller 6 über die Verbindung 14 ein Steuersignal zum Abschalten. Hierdurch wird der Stromverbrauch des Moduls reduziert. Bei einer Verschlechterung des Signals wird die Signalverbesserungseinrichtung 11 wieder aktiviert.

Über die Verbindung 14 können des weiteren Steuersignale über den Status der Signalverbesserungseinrichtung 11 an den Controller 6 gesandt werden. Im übrigen kann auch vorgesehen sein, dass Informationen über den Betriebszustand der Signalverbesserungseinrichtung 11 vom Controller 6 in einen dafür vorgesehenen Speicherbereich des Speichers 9 geschrieben werden und über den Ausgang 8 auslesbar sind.

Im Übrigen entspricht die Ausgestaltung der Figur 3 der Ausgestaltung der Figur 2, so dass auf die diesbezüglichen Ausführungen Bezug genommen wird.

Die Erfindung beschränkt sich in ihrer Ausgestaltung nicht auf die vorstehend dargestellten Ausführungsbeispiele, die lediglich beispielhaft zu verstehen ist. Der Fachmann erkannt, dass zahlreiche alternative Ausführungsvarianten existieren, die trotz ihrer Abweichung von den beschriebenen Ausführungsbeispielen von der in den nachfolgenden Ansprüchen definierten Lehre Gebrauch machen.

## Patentansprüche

1. Digitales optisches Empfangsmodul aufweisend:
- einen optischen Eingang (2),
- einen ersten, digitalen elektrischen Ausgang (7),
- eine opto-elektronischen Wandlereinrichtung (3), die ein am optischen Eingang (2) anliegendes moduliertes optisches Signal in ein analoges elektrisches Signal umwandelt,
- eine mit der Wandlereinrichtung (3) elektrisch verbundene Entscheidereinrichtung (4), die das analoge elektrische Signal in ein digitales Signal umwandelt und dieses an den digitalen elektrischen Ausgang (7) gibt, und
- eine Qualitätserfassungseinrichtung (5), die mit der Wandlereinrichtung (3) verbunden ist und die Qualität des analogen elektrischen Signals vor dessen Umwandlung in ein digitales Signal bestimmt, wobei in Abhängigkeit von der Qualität des analogen elektrischen Signals ein Informationssignal bereitstellt wird,
**dadurch gekennzeichnet, dass**
das Modul zusätzlich einen zweiten elektrischen Ausgang (8) aufweist, über den das Informationssignal oder ein davon abgeleitetes Signal für eine externe Kommunikation bereitgestellt wird.

2. Modul nach Anspruch 1, wobei der zweite elektrische Ausgang (8) durch einen seriellen Bus bereitgestellt ist.

3. Modul nach Anspruch 1, wobei das Modul zusätzlich einen Speicher (9) mit einem bestimmten Speicherbereich (91, 92, 93) aufweist, der mindestens einen vorgegebenen Referenzwert für die Qualität des analogen elektrischen Signals enthält, und die Qualitätserfassungseinrichtung (5) die Qualität eines elektrischen Signals mit dem Referenzwert vergleicht und in Abhängigkeit von dem Ergebnis des Vergleichs ein Informationssignal erzeugt.

4. Modul nach Anspruch 3, wobei das Informationssignal ein bestimmter Signalpegel ist, der auf den zweiten elektrischen Ausgang gelegt wird.

5. Modul nach Anspruch 3, wobei das Informationssignal ein in einem bestimmten Speicherbereich (91, 92, 93) eines Speichers (9) gesetzes Flag ist, das über eine Kommunikationsverbindung aus dem Speicher (9) auslesbar ist.

6. Modul nach Anspruch 3, wobei das Informationssignal ein in einem bestimmten Speicherbereich (91, 92, 93) eines Speichers (9) enthaltener numerischer Wert ist, der über eine Kommunikationsverbindung aus dem Speicher (9) auslesbar ist.

7. Modul nach Anspruch 1 oder 3, wobei die Qualitätserfassungseinrichtung (5) die Qualität des analogen elektrischen Signals unter Auswertung eines Augendiagramms oder von Teilen davon bestimmt.

8. Modul nach Anspruch 7, wobei die Qualitätserfassungseinrichtung (5) die Qualität des analogen elektrischen Signals über einen Wert erfasst, der aus der freien inneren Fläche des Augendiagramms ermittelt wird.

9. Modul nach Anspruch 1, wobei die Qualitätserfassungseinrichtung (5) die Qualität des analogen elektrischen Signals anhand einer Messung der Varianz der Phasenlagen des analogen elektrischen Signals bestimmt.

10. Modul nach Anspruch 1, wobei die Qualitätserfassungseinrichtung (5) die Qualität des analogen elektrischen Signals anhand des Rauschanteils des analogen elektrischen Signals bestimmt.

11. Modul nach Anspruch 1, wobei das Modul zusätzlich einen Controller (6) aufweist, der zumindest die Qualitätserfassungseinrichtung (5) sowie eine externe Kommunikation steuert.

12. Modul nach Anspruch 11, wobei der Controller (6) Teil der Qualitätserfassungeinrichtung ist.

13. Modul nach Anspruch 1, wobei das Modul zusätzlich eine Signalverbesserungseinrichtung (11) aufweist, die ein Ausgangssignal verbesserter Qualität bereitstellt, und die zwischen der Wandlereinrichtung (3) und der Entscheidereinrichtung (4) angeordnet ist, wobei das Ausgangssignal der Signalverbesserungseinrichtung (11) der Qualitätserfassungseinrichtung (5) und/oder der Entscheidereinrichtung (4) zugeführt wird.

14. Modul nach den Ansprüchen 12 und 13, wobei die Signalverbesserungseinrichtung (11) in Abhängigkeit von der Qualität der verbesserten Signale Steuersignale von dem Controller (6) erhält.

15. Modul nach einem der vorangehenden Ansprüche, wobei die Wandlereinrichtung (3) eine Photodiode (31) und einen analogen Verstärker (32) zur Verstärkung des von der Photodiode (31) erfassten Signals aufweist.

16. Verfahren zum Überwachen der Signalqualität eines übertragenen, modulierten optischen Signals, das die folgenden Schritten aufweist:
- in einem Empfangsmodul Wandeln eines modulierten optischen Signals, das eine Übertragungsstrecke durchlaufen hat, in ein analoges elektrisches Signal,
- in dem Empfangsmodul Regenerieren des Signals zur Wiederherstellung einer digitalen Signalform,
- in dem Empfangsmodul Erfassen der Qualität des elektrischen Signals vor dessen Regenerierung zu einer digitalen Signalform, und
- in dem Empfangsmodul Erzeugen eines Informationssignals in Abhängigkeit von der Qualität des elektrischen Signals,
**gekennzeichnet durch**
Bereitstellen des Informationssignals oder eines davon abgeleiteten Signals für eine externe Kommunikation.

17. Verfahren nach Anspruch 16, wobei die Qualität des elektrischen Signals mit einem Referenzwert verglichen und in Abhängigkeit von dem Ergebnis des Vergleichs ein Informationssignal erzeugt wird.

18. Verfahren nach Anspruch 17, wobei als Informationssignal ein bestimmter Spannungspegel auf einer Leitung bereitgestellt wird.

19. Verfahren nach Anspruch 17, wobei als Informationssignal in einem Speicher ein Flag gesetzt wird und der Flag über eine Kommunikationsverbindung aus dem Speicher auslesbar ist.

20. Verfahren nach Anspruch 17, wobei als Informationssignal in einem Speicher ein numerischer Wert gesetzt wird und der numerische Wert über eine Kommunikationsverbindung aus dem Speicher auslesbar ist.

21. Verfahren nach Anspruch 16, wobei die Qualität des elektrischen Signals durch mindestens einen numerischen Wert dargestellt und dieser numerische Wert mit einem Referenzwert verglichen wird, wobei in Abhängigkeit von dem Ergebnis des Vergleichs ein Informationssignal erzeugt wird.

22. Verfahren nach Anspruch 21, wobei ein Informationssignal dann erzeugt wird, wenn die Qualität des elektrischen Signals den Referenzwert unterschreitet.

23. Verfahren nach Anspruch 16, wobei die externe Kommunikations mit einem Netzwerkmanagement erfolgt.

24. Verfahren nach Anspruch 16, wobei die externe Kommunikations mit einem Host-Rechner erfolgt.

## Claims

1. Digital optical receiving module, comprising:
- an optical input (2),
- a first, digital electrical output (7),
- an opto-electronic converter device (3) which converts a modulated signal at the optical input (2) into an analogue electrical signal,
- a decision making device (4) electrically connected to the converter device (3) which converts the analogue electrical signal into a digital signal and forwards the latter to the digital electrical output (7), and
- a quality detecting device (5) which is connected to the converter device (3) and determines the quality of the analogue electrical signal before it is converted into a digital signal, whereby a data signal is provided in dependence upon the quality of the analogue electrical signal,
**characterised in that**
the module additionally comprises a second electrical output (8), via which the data signal or a signal derived from it is provided for an external communication.

2. Module according to claim 1, wherein the second electrical output (8) is provided by a serial bus.

3. Module according to claim 1, wherein the module additionally comprises a memory (9) with a certain memory area (91, 92, 93) which contains at least one predefined reference value for the quality of the analogue electrical signal, and the quality detecting device (5) compares the quality of an electrical signal with the reference value and generates a data signal in dependence upon the result of the comparison.

4. Module according to claim 3, wherein the data signal is a determined signal level which is placed at the second electrical output.

5. Module according to claim 3, wherein the data signal is a flag placed in a certain area (91, 92, 93) of a memory (9), whereby the flag can be read from the memory (9) via a communication connection.

6. Module according to claim 3, wherein the data signal is a numerical value contained in a certain memory area (91, 92, 93) of a memory (9) which can be read from the memory (9) via a communication connection.

7. Module according to claim 1 or 3, wherein
the quality detecting device (5) determines the quality of the analogue electrical signal by evaluating an eye diagram or parts thereof.

8. Module according to claim 7, wherein
the quality detecting device (5) detects the quality of the analogue electrical signal by means of a value which is determined from the free inner area of the eye diagram.

9. Module according to claim 1, wherein the quality detecting device (5) determines the quality of the analogue electrical signal by measuring the variance of the phasing of the analogue electrical signal.

10. Module according to claim 1, wherein
the quality detecting device (5) determines the quality of the analogue electrical signal using the noise component of the analogue electrical signal.

11. Module according to claim 1,
wherein the module additionally comprises a controller (6) which controls at least the quality detecting device (5) and an external communication.

12. Module according to claim 11, wherein the controller (6) is part of the quality detecting device.

13. Module according to claim 1, wherein the module additionally comprises a signal improving device (11) which provides an output signal of improved quality, and which is arranged between the converter device (3) and the decision making device (4), wherein the output signal of the signal improving device (11) is supplied to the quality detecting device (5) and/or to the decision making device (4).

14. Module according to claims 12 and 13, wherein the signal improving device (11) receives control signals from the controller (6) in dependence upon the quality of the improved signals.

15. Module according to one of the preceding claims,
wherein the converter device (3) comprises a photodiode (31) and an analogue amplifier (32) for amplifying the signal detected by the photodiode (31).

16. Method for monitoring the quality of a modulated optical transmission signal which comprises the following steps:
- in a receiving apparatus, conversion of a modulated optical signal which has passed through a transmission path into an analogue electrical signal,
- in the receiving apparatus, regeneration of the signal in order to reproduce a digital signal shape,
- in the receiving apparatus, detection of the quality of the electrical signal before its regeneration to a digital signal shape, and
- in the receiving apparatus, generation of a data signal in dependence upon the quality of the electrical signal,
**characterised by**
the provision of the data signal or a signal derived from it for an external communication.

17. Method according to claim 16, wherein the quality of the electrical signal is compared with a reference value and a data signal is generated in dependence upon the result of the comparison.

18. Method according to claim 17, wherein a certain voltage level is provided on a line as a data signal.

19. Method according to claim 17, wherein a flag is placed in a memory as a data signal and the flag can be read from the memory using a communication connection.

20. Method according to claim 17, wherein a numerical value is placed in a memory as a data signal and the numerical value can be read from the memory using a communication connection.

21. Method according to claim 16, wherein the quality of the electrical signal is represented by at least one numerical value and this numerical value is compared with a reference value, whereby a data signal is generated in dependence upon the result of the comparison.

22. Method according to claim 21, wherein a data signal is generated if the quality of the electrical signal falls below the reference value.

23. Method according to claim 16, wherein the external communication is realised through a network management.

24. Method according to claim 16, wherein the external communication is realised with a host computer.

## Revendications

1. Module de réception optique numérique comportant :
une entrée optique (2),
une première sortie électrique numérique (7),
un transformateur optoélectronique (3) qui transforme un signal optique modulé présent à l'entrée optique (2) en un signal électrique analogique,
un organe de décision (4) relié électriquement au transformateur (3), qui transforme le signal électrique analogique en un signal numérique et émet celui-ci à la sortie électrique numérique (7), et
un dispositif de détection de la qualité (5) qui est relié au transformateur (3) et qui détermine la qualité du signal électrique analogique avant la transformation de celui-ci en un signal numérique, un signal d'information étant établi en fonction de la qualité du signal électrique analogique,
**caractérisé en ce que**
le module comporte en plus une deuxième sortie électrique (8), qui sert à fournir le signal d'information ou un signal établi à partir de celui-là pour une communication externe.

2. Module selon la revendication 1, dans lequel la deuxième sortie électrique (8) est fournie par un bus série.

3. Module selon la revendication 1, dans lequel le module comporte en plus une mémoire (9) avec une zone de mémoire déterminée (91, 92, 93) qui contient au moins une valeur de référence prédéfinie pour la qualité du signal électrique analogique et le dispositif de détection de la qualité (5) compare la qualité d'un signal électrique avec la valeur de référence et génère un signal d'information en fonction du résultat de la comparaison.

4. Module selon la revendication 3, dans lequel le signal d'information est un niveau de signal déterminé établi sur la deuxième sortie électrique.

5. Module selon la revendication 3, dans lequel le signal d'information est un drapeau placé dans une zone de mémoire (91, 92, 93) déterminée d'une mémoire (9) qui est lisible au moyen d'une liaison de communication à partir de la mémoire (9).

6. Module selon la revendication 3 dans lequel le signal d'information est une valeur numérique contenue dans une zone de mémoire (91, 92, 93) déterminée d'une mémoire (9) qui est lisible au moyen d'une liaison de communication à partir de la mémoire (9).

7. Module selon les revendications 1 ou 3, dans lequel le dispositif de détection de la qualité (5) détermine la qualité du signal électrique analogique par analyse d'un diagramme visuel ou de parties de celui-ci.

8. Module selon la revendication 7, dans lequel le dispositif de détection de la qualité (5) détecte la qualité du signal électrique analogique par le biais d'une valeur communiquée depuis la surface interne libre du diagramme visuel.

9. Module selon la revendication 1, dans lequel le dispositif de détection de la qualité (5) détermine la qualité du signal électrique analogique au moyen d'une mesure de la variance des positions de phases du signal électrique analogique.

10. Module selon la revendication 1, dans lequel le dispositif de détection de la qualité (5) détermine la qualité du signal électrique analogique au moyen du niveau de bruit photoélectrique du signal électrique analogique.

11. Module selon la revendication 1, dans lequel le module comporte en plus un contrôleur (6) qui commande au moins le dispositif de détection de la qualité (5) ainsi qu'une communication externe.

12. Module selon la revendication 11, dans lequel le contrôleur (6) fait partie du dispositif de détection de la qualité.

13. Module selon la revendication 1, dans lequel le module comporte en plus un dispositif d'amélioration des signaux (11) qui fournit un signal de sortie de meilleure qualité et qui est disposé entre le transformateur (3) et l'organe de décision (4), le signal de sortie du dispositif d'amélioration des signaux (11) étant dirigé vers le dispositif de détection de la qualité (5) et/ou l'organe de décision (4).

14. Module selon les revendications 12 et 13, dans lequel le dispositif d'amélioration des signaux (11) reçoit des signaux de commande émis par le contrôleur (6) en fonction de la qualité des signaux améliorés.

15. Module selon l'une des revendications précédentes, dans lequel le transformateur (3) comporte une photodiode (31) et un amplificateur analogique (32) servant à amplifier le signal détecté par la photodiode (31).

16. Procédé de surveillance de la qualité de signal d'un signal de transmission optique modulé qui comporte les étapes suivantes :
- dans un module de réception, transformation d'un signal optique modulé, ayant parcouru une distance de transmission, en un signal électrique analogique,
- dans le module de réception, régénération du signal permettant la restitution d'une forme de signal numérique,
- dans le module de réception, détection de la qualité du signal électrique avant la régénération de celui-ci en une forme de signal numérique, et
- dans le module de réception, production d'un signal d'information en fonction de la qualité du signal électrique,
**caractérisé par**
la fourniture du signal d'information ou d'un signal émis à partir de ce dernier pour une communication externe.

17. Procédé selon la revendication 16, dans lequel la qualité du signal électrique est comparée à une valeur de référence et un signal d'information est généré en fonction du résultat de la comparaison.

18. Procédé selon la revendication 17, dans lequel un niveau de tension déterminé est fourni comme signal d'information sur une ligne.

19. Procédé selon la revendication 17, dans lequel un drapeau est placé comme signal d'information dans une mémoire et le drapeau est lisible au moyen d'une liaison de communication à partir de la mémoire.

20. Procédé selon la revendication 17, dans lequel une valeur numérique dans une mémoire est donnée comme signal d'information et la valeur numérique est lisible au moyen d'une liaison de communication à partir de la mémoire.

21. Procédé selon la revendication 16, dans lequel la qualité du signal électrique est représentée par au moins une valeur numérique et cette valeur numérique est comparée à une valeur de référence, un signal d'information étant généré en fonction du résultat de la comparaison.

22. Procédé selon la revendication 21, dans lequel un signal d'information est généré lorsque la qualité du signal électrique est inférieure à la valeur de référence.

23. Procédé selon la revendication 16, dans lequel la communication externe est transmise par une gestion de réseau.

24. Procédé selon la revendication 16, dans lequel la communication externe est transmise par un serveur.
